# EUROPEAN PATENT APPLICATION

(11) **EP 2 876 187 A1**
(43) Date of publication of application: **27.05.2015**
(21) Application number: 13194489.4
(22) Date of filing: 26.11.2013
(51) Int. Cl.: C25B 15/00, C25B 15/08, C25B 1/04, C25B 9/00, C25B 9/04

(54) **Plant and method for the production of oxyhydrogen**

(71) Applicant: Nanotechlab S.A., 1752 Villars-Sur-Glane (CH)
(72) Inventor: Toffoletto, Sandro, 1752 Villars-Sur-Glane (CH)
(74) Representative: Vittorangeli, Lucia

(57) **Abstract**

A plant and relative method for the production of oxyhydrogen comprises at least one electrolytic cell (2) comprising a plurality of plate electrodes (3a, 3b, 3c) arranged with active surfaces (4) parallel and facing each other inside said electrolytic cell in which they are immersed in an electrolyte. A supply line for the oxyhydrogen produced by electrolysis inside the electrolytic cell (2) is arranged in communication on one side with the electrolytic cell (2), and on the other with an outlet of the plant (1). A supply circuit (100) for the at least one electrolytic cell (2) is configured for generating a supply signal (S1) for the cell determined by a control signal (Sc) having a pattern with low frequency pulses (fb).

## Description

The present invention has as its subject a plant and a method for the production of oxyhydrogen.

Oxyhydrogen is a mixture of hydrogen and oxygen gases typically in the atomic ratio 2 to 1, the same as water.

Oxyhydrogen can be obtained from the electrolysis of water. For example US4,014,777 shows an electrolytic cell used for the production of oxyhydrogen in a welding apparatus. The cell comprises a plurality of plate electrodes immersed in an electrolyte consisting of a solution of KOH in water. The electrodes can be connected to a source of direct current through respective terminals. An apparatus for gas/liquid separation (bubbler) is connected directly in series at the fluid outlet for extracting the gas part and capturing any electrolyte therein. Suitable electrolytes include sodium hydroxide, potassium hydroxide and other easily ionised salts.

In addition to its use in the field of cutting, oxyhydrogen is also suitable for injecting into an engine along with the fuel, making it possible to reduce the energy consumption and reduce the accumulation of residues in the combustion chamber.

The known plants for the production of oxyhydrogen have low productivity compared with a high consumption. They also do not allow the production of oxyhydrogen at high pressure since the output of the electrolytic cells diminishes as the pressure in the plant grows.

In this scope, the technical task of the present invention is to make available a plant and a method for the production of oxyhydrogen which has a high productivity combined with a limited electricity requirement.

A further object of the present invention is to make available a plant and a method for the production of oxyhydrogen which permits production at pressures greater than those of the known art, while however maintaining a good output from the electrolytic cells.

These and other objects are substantially achieved by a plant and a method for the production of oxyhydrogen according to the description given in one or more of the attached claims. The dependent claims correspond to possible embodiments of the invention.

Further characteristics and advantages will appear more clearly from the detailed description of a preferred, but not exclusive, embodiment of a plant and a method for the production of oxyhydrogen.

This description is provided with reference to the attached drawings, having a purely exemplary and therefore non-limiting purpose, wherein:
- figure 1 is a diagram of the production plant for oxyhydrogen according to the present invention;
- figure 2 is an enlarged view of detail A of figure 1 sectioned along a diametral plane;
- figures 2a-2b are plan views of elements of electrolytic cells of the plant of figure 1;
- figure 3a is an enlarged view of detail B of figure 1 with a diagram of the flow of the gas;
- figure 3b is a view of a detail of figure 3a;
- figure 4a is an enlarged view of detail C of figure 1 with a diagram of the flow of the gas;
- figure 4b is a view of a detail of figure 4a;
- figure 5 is an enlarged view of detail D of figure 1 with a diagram of the flow of gas;
- figure 6 is a supply circuit of an electrolytic cell of the oxyhydrogen production plant of figure 1;
- figure 7a is a diagram of the pattern of a supply signal for the electrolytic cells of the oxyhydrogen production plant shown in figure 1 as a function of time.
- figure 7b is a diagram of the pattern of a potential difference generated in the electrolytic cells of the oxyhydrogen production plant shown in figure 1. With reference to figure 1,reference 1 globally indicates a plant for the production of oxyhydrogen.

The plant 1 comprises at least one electrolytic cell 2, preferably two electrolytic cells.

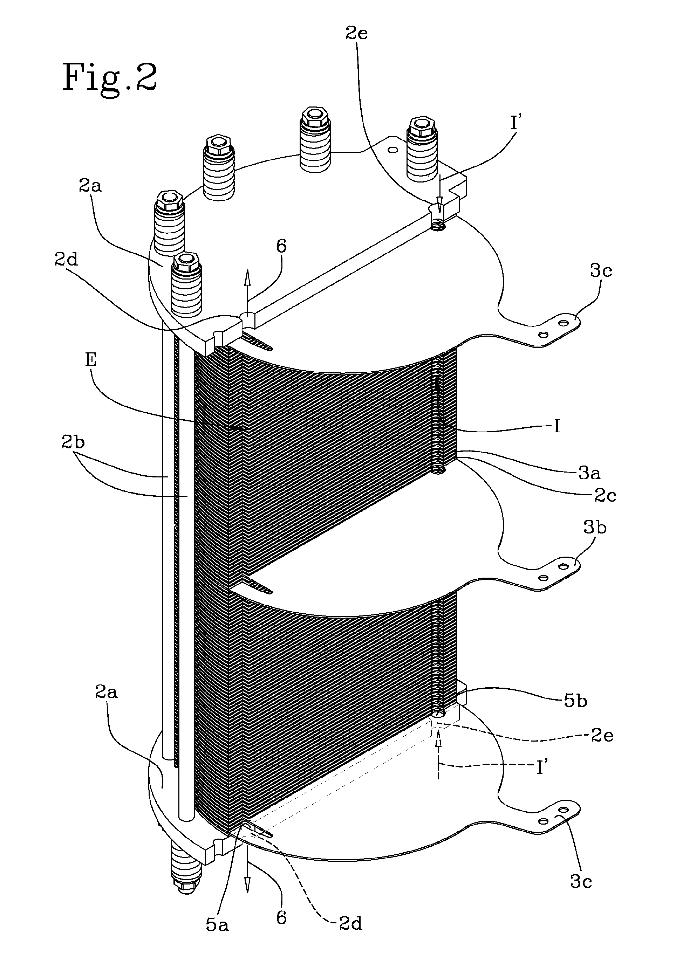

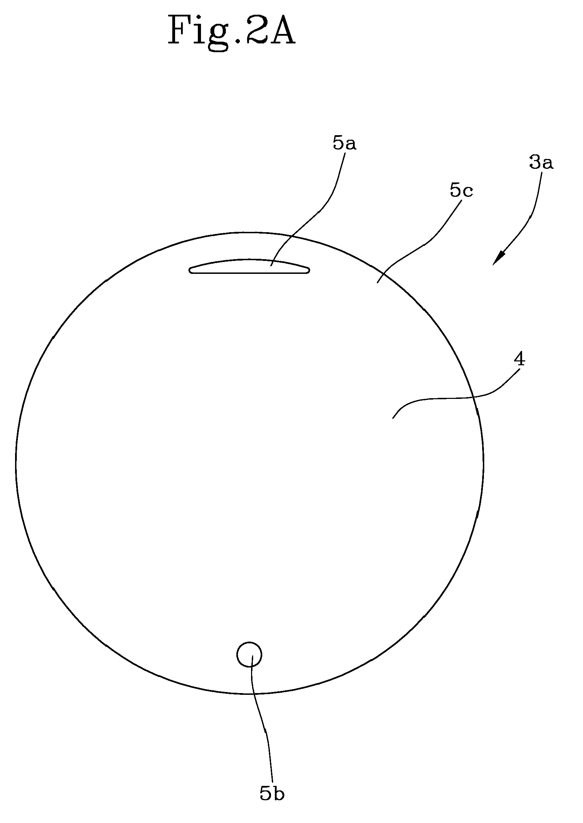

References 3a-3c indicate plate electrodes arranged with active surfaces 4 parallel and facing each other inside a cell in which the plate electrodes are immersed in an electrolyte for example consisting preferably of a solution of KOH in water. The electrolyte is suitable for generating a mixture of hydrogen and oxygen gases following activation of the electrolytic cell. In particular, 3a indicates a plate corresponding to a neutral electrode, 3b indicates a plate corresponding to a positive electrode, 3c indicates a plate corresponding to a negative electrode. (figures 2a-2b)

Preferably each plate has a substantially circular conformation in the plane parallel to the active surfaces 4.

Each plate comprises a hole 5a and a hole 5b preferably arranged in an opposed position, for example with respect to a diameter of the plate. Holes 5a and 5b are arranged at a determinate distance from the outer edge, thus leaving a annular peripheral portion 5c.

Hole 5b has the function of intake for the KOH solution while hole 5a has the function of outlet for the KOH and oxyhydrogen solution. Preferably the electrolytic cell 2 is arranged so that the intake holes 5b for the KOH solution are arranged at the bottom while the holes 5a for emission of the KOH and oxyhydrogen solution are arranged at the top.

Hole 5b has a substantially circular conformation while hole 5a has an elongated conformation preferably in the form of a slot with its extension along a direction parallel to the peripheral edge of the plate, in particular with its extension along a tangential direction.

The plate electrodes are advantageously made of titanium which makes it possible to increase the efficiency of the electrolytic cell because deposits or plating do not form on the active surface 4. Furthermore, they are obtained following microsanding performed for example with micronized glass flakes. Preferably the active surfaces 4 have a superficial roughness of approximately Ra 0.10, preferably lower than approximately Ra 0.50, so as to increase the contact surface between the electrolyte and the plate electrodes and thus increase the efficiency of the electrolytic cell. Thanks to the superficial roughness of the plates and the current supply pulsed at high frequency, as will be described below, the output of the electrolytic cell is such as to be able to produce oxyhydrogen at high pressure (up to 8 bar).

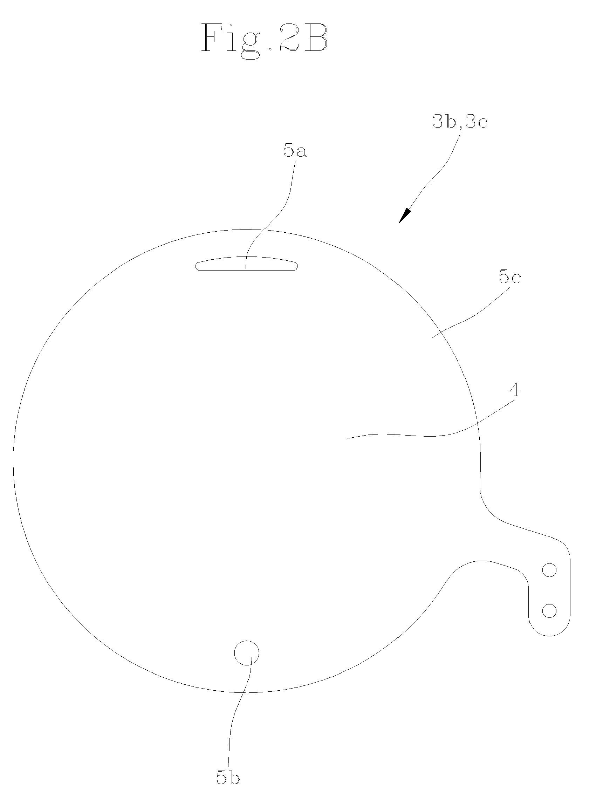

With reference to figure 2, an electrolytic cell has been illustrated enlarged in section to highlight its internal structure. The electrolytic cell 2 comprises two end elements 2a and a plurality of tie-rods 2b inserted into respective holes in the end elements and locked for example by threaded elements. The plate electrodes are arranged at a mutual distance of about 3 mm. By keeping the plates so close together it is possible to contribute to obtaining a high output from the electrolytic cell, so as to enable the production oxyhydrogen at high pressure (up to 8 bar).

At the annular peripheral portion 5c the plates are packed with alternating spacers 2c so as to ensure a distance of about 3 mm between surfaces 4 facing each other.

In the pack arrangement of the plates, holes 5b are arranged aligned to form an intake channel I' for the KOH solution by means of an intake duct to the plant which will be described below. The holes 5b and the respective intake channel I' are aligned with holes 2e in each end element 2a.

In the pack arrangement of the plates, holes 5a are arranged aligned to form an emission channel E for the solution of KOH and oxyhydrogen by means of a first supply channel 6 for the plant, which will be described below. The holes 5a and the respective emission channel E are aligned with holes 2d in each end element 2a.

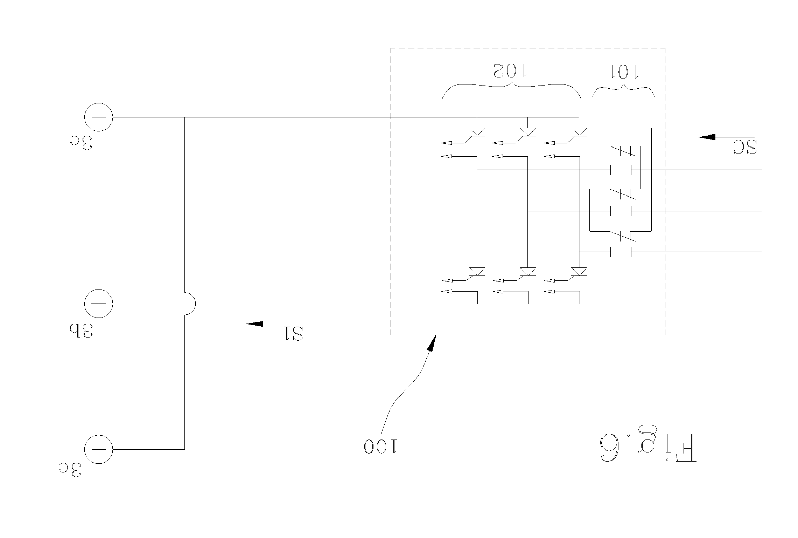

With reference to figure 6 a supply circuit 100 is illustrated for an electrolytic cell 2.

The feed circuit 100 receives as input a control signal Sc having a pattern with low frequency pulses fb.

A pulse generator (not shown) generates the control signal Sc.

Advantageously, according to the invention, the supply circuit 100 of at least one electrolytic cell 2 is configured for generating a supply signal S1 determined by the control signal Sc, wherein the latter has a pattern with low frequency pulses fb.

In detail, the low frequency fb, according to the invention, is a frequency of less than 20 Hz.

In particular, this low frequency fb is comprised between 2 and 20 Hz.

In a preferred embodiment, this low frequency fb is of 3 Hz.

Still with reference to figure 6, in a preferred embodiment the supply circuit 100 comprises at least one switch 101 and a rectifier 102. Advantageously, according to the invention, the pulse generator (not shown) governs the switch 101 in opening and closing at frequency fb.

In a preferred embodiment, the switch 101 is made with an IGBT transistor.

The technical effect of the use of this transistor is a guarantee of operating at high voltage values and low frequency values.

By contrast, other transistors, as for example MOS transistors, characteristic of operation at high frequency, could not function in the technology of the invention. (As also detailed below in the description).

In a preferred embodiment, the rectifier 102 is a diode bridge.

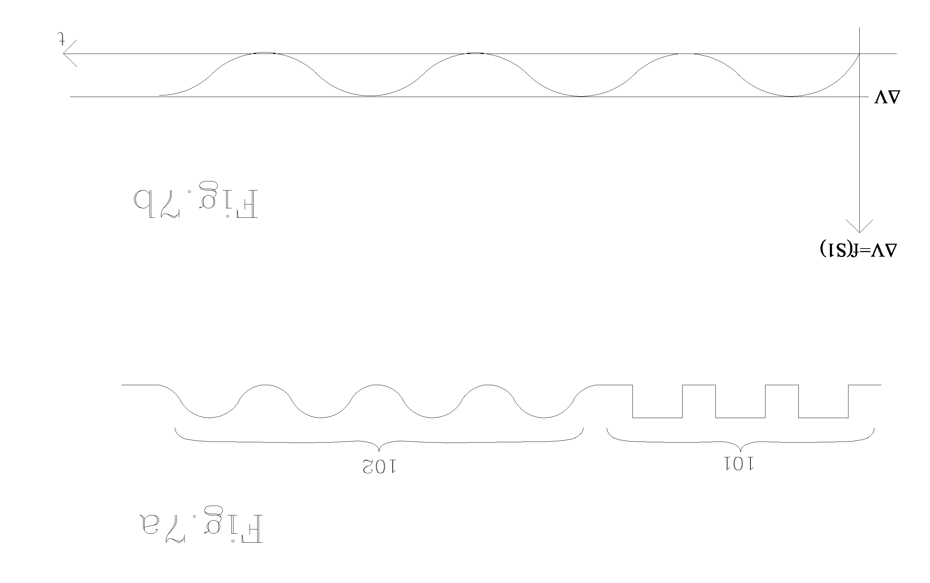

Figure 7a shows the pattern of the supply signal S1 during the passage from the switch 101, in particular an IGBT transistor, and from the rectifier 102, in particular a diode bridge.

The output signal S1 from the rectifier 102 is substantially continuous.

In one embodiment this signal S1 is representative of a voltage of 160 V, in particular at 600 A.

This voltage is applied to the positive electrode of the cell 2, as shown in figure 6.

In figure 7b the pattern is shown of a potential difference ΔV between adjacent pairs of electrodes 3a,3b,3c in cell 2 determined by the supply received from the signal S1; in other words ΔV = f(S1).

In particular, ΔV corresponds to the voltage of the signal S1, i.e. ΔV = V(S1).

Advantageously according to the invention, the low frequency fb of the control signal Sc makes the potential variation curve ΔV detectable by cell 2, which is therefore able to operate for the production of oxyhydrogen, according to the invention.

By contrast, high frequency values, for example in a range of frequencies normally supported by MOS transistors, would cause a negligible potential difference ΔV, or anyway not sufficient to produce a perceptible effect on cell 2, frustrating the objective of the invention.

In other words, frequency values in the range supported by MOS transistors would cause a substantially flat potential difference curve ΔV, not in any way affecting cell 2 which (vice versa) would not achieve any guaranteed result from the embodiment of the invention.

The pattern of the supply signal S1 in output from the rectifier 102, in particular from the diode bridge, makes it possible to exploit the electrochemical inertia of the cell itself to limit the plant's consumption. In fact, the supply is at a high value for the time necessary to cause the activation of the cell, and drops for the time in which the cell is active by electrochemical inertia; at the end of this predefined period of electrochemical inertia (low supply), circuit 100, thanks to the control signal Sc, goes back to raising the supply, i.e. returns to raising the signal S1, to keep the cell in operation.

Furthermore, following each pulse of the control signal Sc, which causes a raising of the supply signal S1, the bubbles of gas (oxyhydrogen) remain of limited size and separate rapidly from the plate electrodes.

The supply controlled by the pulses of the control signal Sc makes it possible to increase the output of the electrolytic cell so as to be able to produce oxyhydrogen at a high pressure (up to 8 bar).

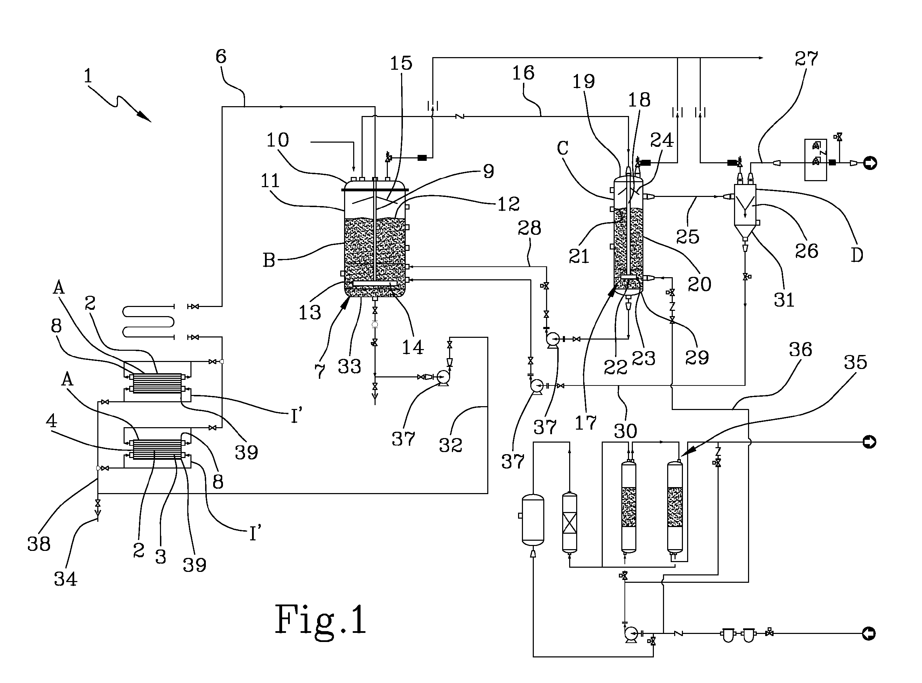

With reference to figure 1, a line of supply of oxyhydrogen produced by electrolysis inside the electrolytic cells is arranged in communication with, on one side, at least one electrolytic cell 2, and on the other side with an outlet of the plant. In particular, 6 indicates a first supply duct forming part of said supply line arranged between the electrolytic cells 2 and a first bubble apparatus 7 (or first bubbler).

In particular the first supply duct 6 on one side is placed in communication with an upper portion 8 of the electrolytic cells 2 and on the other side flows into the first bubbler 7.

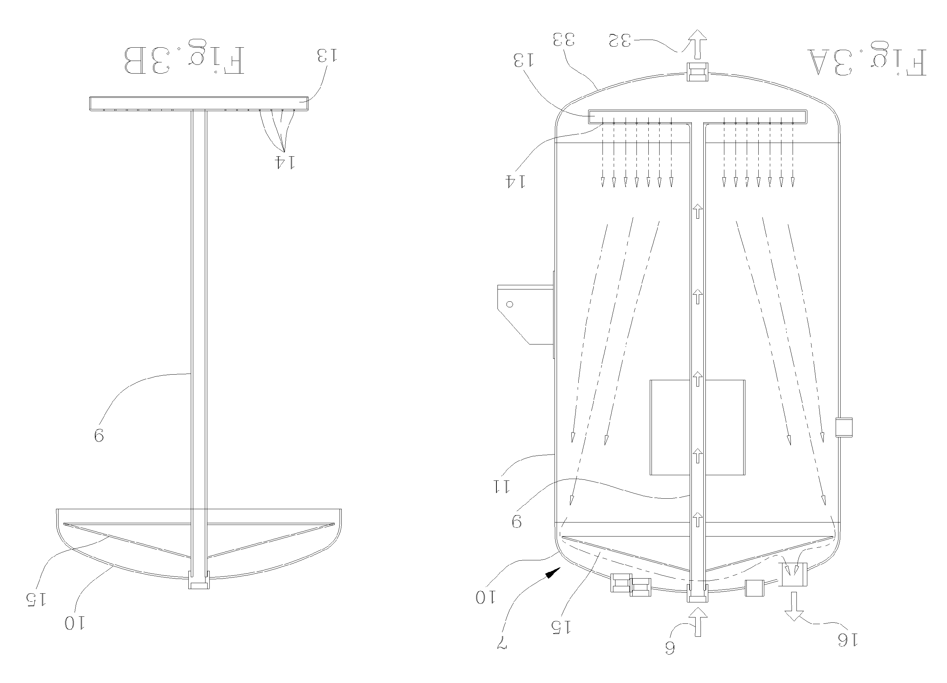

With reference to figure 3a, the first bubbler 7 has been illustrated enlarged to highlight its internal structure. With reference to figure 3b an internal component of the first bubbler 7 has been indicated.

Reference 9 indicates a portion of the first supply duct 6 which extends inside the first bubbler 7. In particular the first supply duct 6 is inserted into the first bubbler 7 from above, in proximity to an upper portion 10 of the first bubbler itself.

The first bubbler 7 comprises a casing 11 suitable for receiving a liquid, preferably water, up to a level 12. The first supply duct 6, and in particular its portion 9, extend inside the casing 11 so as to bring about the emission of the gas coming from the electrolytic cells below level 12.

With particular reference to figures 3a and 3b, 13 indicates a first distributor connected to one end of the first supply duct 6, in particular to an end of the portion 9. This first distributor 13 forms a series of nozzles 14 arranged in communication with the first supply duct to cause the gas coming from the electrolytic cells within the liquid to be emitted uniformly. Reference 15 indicates a first canopy arranged above the first distributor 13, above the level 12 of the liquid.

Preferably the first canopy 15 has a conical conformation (tapered) with a larger base arranged at the bottom.

The conformation of the first canopy 15 forms a restriction in the section for the passage of the gas inside the first bubbler 7 and consequently a zone of acceleration for the gas. Furthermore, the conformation of the first canopy 15 forms a sliding surface for the drops of water and electrolyte released by the gas.

Reference 16 indicates a second supply duct forming part of the supply line which on one side is placed in communication with the upper portion 10 of the first bubbler 7 and on the other side flows into a second bubbler 17, also defined as a purifier.

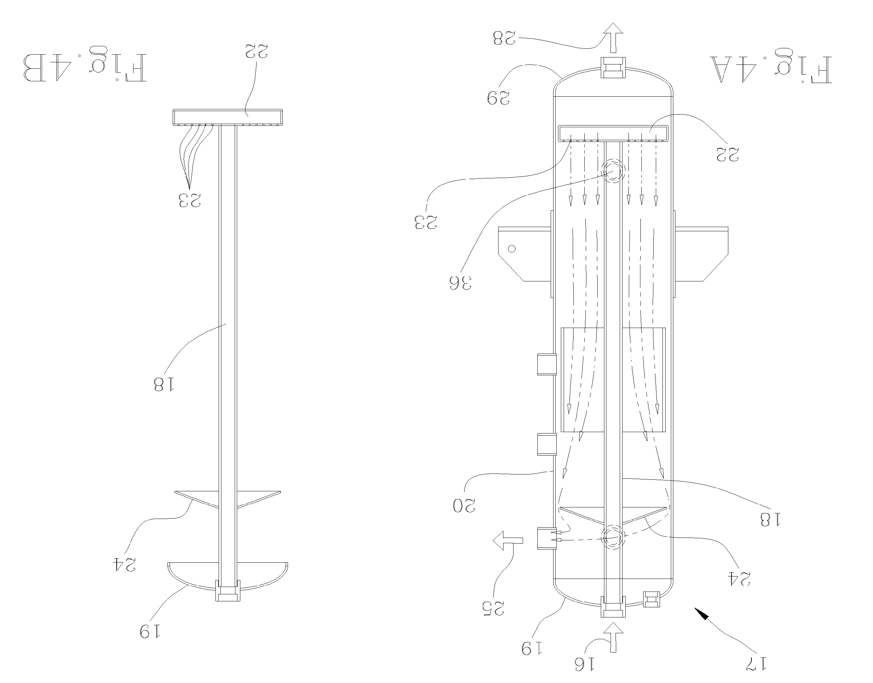

With reference to figures 4a and 4b, the second bubbler 17 has been illustrated enlarged to highlight its internal structure, preferably substantially similar to that of the first bubbler. With reference to figure 4b an internal component of the second bubbler 17 has been indicated. Reference 18 indicates a portion of the second supply duct 16 which extends inside the second bubbler 17. In particular the second supply duct 16 is inserted into the second bubbler 17 from above, in proximity to an upper portion 19 of the second bubbler itself.

The second bubbler 17 comprises a casing 20 suitable for receiving a liquid, preferably ultrapure water, up to a level 21. The second supply duct 16, and in particular its portion 18, extend inside the casing 20 so as to bring about the release of the gas coming from the electrolytic cells below level 21.

With particular reference to figure 4, reference 22 indicates a second distributor connected to one end of the second supply duct 16, in particular to an end of portion 18. This second distributor 22 forms a series of nozzles 23 arranged in communication with the second supply duct to cause the gas coming from the first bubbler 7 into the second bubbler 17 to be emitted uniformly, below level 21, performing a "washing" of the gas in ultrapure water.

Reference 24 indicates a second canopy arranged above the second distributor 22, above the level 21 of the liquid.

Preferably the second canopy 24 has a conical conformation (tapered) with a larger base arranged at the bottom.

The conformation of the second canopy 24 forms a restriction in the section for the passage of the gas inside the second bubbler 17 and consequently a zone of acceleration for the gas. Furthermore, the conformation of the second canopy 24 forms a sliding surface for the drops of water and electrolyte released by the gas.

Reference 25 indicates a third supply duct forming part of the supply line which on one side is placed in communication with the upper portion 19 of the second bubbler 17 and on the other side flows into a cyclone 26.

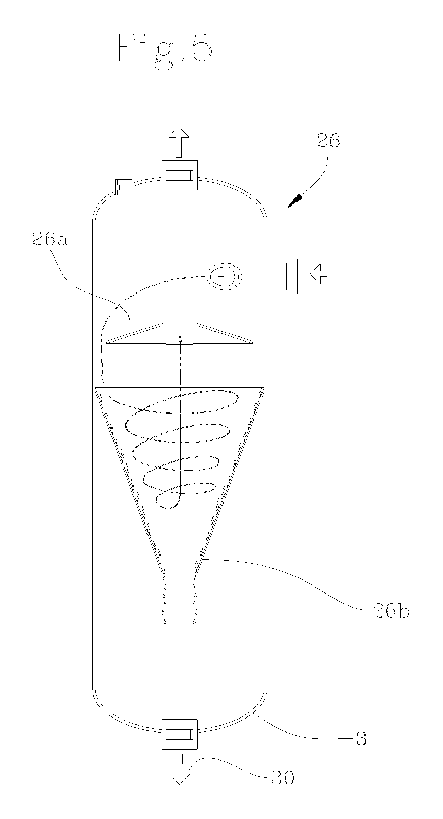

With reference to figure 5, the cyclone 26 has been illustrated enlarged to highlight its internal structure. Reference 26a indicates a third canopy arranged above the inside of the cyclone. Preferably the third canopy 26a has a conical conformation (tapered) with a larger base arranged at the bottom. Reference 26b indicates a conical element with a larger base arranged at the top and a smaller base open to allow the passage of the gas which rises towards the third canopy and towards the outlet, eliminating every trace of water and/or alkaline solution.

Finally, reference 27 indicates an outlet duct forming part of said supply line which on one side is placed in communication with the cyclone and on the other outflows in proximity to the outlet from the plant 1 to send the oxyhydrogen to an external user, not illustrated.

The first bubbler 7, the second bubbler 17 and the cyclone 26 form means of eliminating the liquid (electrolyte, in particular KOH) in the oxyhydrogen gas produced by the electrolytic cells.

Reference 28 indicates a first drainage duct which connects the second bubbler 17, in particular a lower portion 29 of the second bubbler 17, with the first bubbler 7, preferably below level 12.

Reference 30 indicates a second drainage duct which connects the cyclone 26, in particular a lower portion 31 of the cyclone 26, with the first bubbler 7, preferably below level 12.

Reference 32 indicates a third drainage duct which connects the first bubbler 7, in particular a lower portion 33 of the first bubbler 7 with a drain 34.

Reference 35 indicates a reverse osmosis unit, of known type and therefore not further described and illustrated in detail, suitable for purifying the water directed to the second bubbler 17 by means of a delivery duct 36. The reverse osmosis unit 35 is connected to a water distribution network, and is responsible for purifying the intake water preferably with conductivity below 5 microSiemens and then supplying it through the delivery duct 36 to the second bubbler 17.

Pumping means 37 may be provided along the first drainage duct 28 and/or the second drainage duct 31 and/or the third drainage duct 33.

A further drainage duct 38 is connected on one side to a lower portion 39 of the electrolytic cells 2 and on the other side to the drain 34.

The first drainage duct 28, the second drainage duct 30, the third drainage duct 32 and the further drainage duct 38 form a drainage line for said plant.

## Claims

1. A plant (1) for the production of oxyhydrogen, comprising:
- at least one electrolytic cell (2) comprising a plurality of plate electrodes (3a, 3b, 3c) arranged with active surfaces (4) parallel and facing each other inside the electrolytic cell wherein they are immersed in an electrolyte;
- a line of supply of oxyhydrogen produced by electrolysis inside the at least one electrolytic cell (2), said line of supply being arranged in communication on one side with said at least one electrolytic cell (2), and on the other with an outlet from said plant (1);
- a supply circuit (100) of said at least one electrolytic cell (2) configured for generating a supply signal (S1) for said cell determined by a control signal (Sc) having a pattern with low frequency pulses (fb).

2. The plant according to claim 1 wherein said low frequency (fb) is less than 20 Hz.

3. The plant according to claim 1 or 2 wherein said supply circuit (100) comprises at least one switch (101) and a rectifier (102).

4. The plant according to claim 3 wherein said switch (101) is made with an IGBT transistor.

5. The plant according to claim 3 or 4 wherein said rectifier (102) is a diode bridge.

6. The plant (1) according to one or more of the preceding claims, wherein the plate electrodes (3a, 3b, 3c) are made of titanium and/or have active surfaces (4) treated with glass microsanding and/or which have a superficial roughness of approximately Ra 0.10, preferably lower than approximately Ra 0.50.

7. The plant (1) according to one or more of the preceding claims, wherein the plate electrodes (3a, 3b, 3c) are arranged with active surfaces (4) parallel and facing each other at a mutual distance of approximately 3 mm.

8. The plant (1) according to one or more of the preceding claims, wherein the plate electrodes comprise holes respectively for intake of the electrolyte (5b) and for emission of the electrolyte and oxyhydrogen solution (5a), said holes being arranged in an opposed position and at a determinate distance from an outer edge thus leaving an annular peripheral portion (5c), said electrolytic cell (2) being arranged so that the holes (5b) for introducing the electrolyte solution are arranged at the bottom, while the holes (5a) for emission of the electrolyte and oxyhydrogen solution are arranged at the top, wherein preferably the hole (5a) for emission of the electrolyte and oxyhydrogen solution has an elongated conformation preferably in the form of a slot with extension along a direction parallel to the outer edge of the plate, in particular with extension along a tangential direction.

9. The plant (1) according to one or more of the preceding claims, comprising a first bubbler (7) and a second bubbler (17) arranged along the supply line so that the gas coming from the electrolytic cells meets in sequence said first and second bubbler, said plant comprising furthermore a drainage line comprising a first drainage duct (28) which connects the second bubbler (17), in particular a lower portion (29) of the second bubbler (17), with the first bubbler (7), preferably below a level (12) of liquid contained in the first bubbler (7).

10. The plant (1) according to one or more of the preceding claims, comprising a first bubbler (7) and a cyclone (26) arranged along the supply line so that the gas coming from the electrolytic cells meets in sequence said first bubbler and said cyclone, said plant comprising furthermore a drainage line comprising a second drainage duct (30) which connects the cyclone (26), in particular a lower portion (31) of the cyclone (26), with the first bubbler (7), preferably below a level (12) of liquid contained in the first bubbler (7).

11. The plant (1) according to claim 9 or 10, wherein said drainage line comprises a third drainage duct (32) which connects the first bubbler (7), in particular a lower portion (33) of the first bubbler (7) with a drain (34) and/or a further drainage duct (38) connected on one side to a lower portion (39) of the electrolytic cells (2) and on the other to the drain (34).

12. The plant (1) according to one or more of claims 9-11, wherein said supply line comprises a first supply duct (6) arranged between the electrolytic cells (2) and the first bubbler (7), said first supply duct (6) comprising a portion (9) which extends inside the first bubbler (7), being inserted from above so as to cause the release of the gas coming from the electrolytic cells (2) below the level (12), wherein said first supply duct (6) comprises a first distributor (13) connected to one end of the first supply duct (6), preferably at one end of portion (9), said first distributor forming a series of nozzles (14) arranged in communication with the first supply duct to cause the gas coming from the electrolytic cells (2) within the liquid to be emitted uniformly.

13. The plant (1) according to one or more of claims 9-12, wherein said supply line comprises a second supply duct (16) arranged between the first bubbler (7) and the second bubbler (17), said second supply duct (16) comprising a portion (18) which extends inside the second bubbler (17), being inserted from above so as to cause the release of the gas coming from the electrolytic cells (2) below the level (21), wherein said second supply duct (16) comprises a second distributor (22) connected to one end of the second supply duct (16), preferably at an end of portion (18), said second distributor forming a series of nozzles (23) arranged in communication with the second supply duct to cause the gas coming from the first bubbler (7) within the liquid to be emitted uniformly.

14. A method for the production of oxyhydrogen comprising:
- activating at least one electrolytic cell (2) comprising a plurality of plate electrodes (3a, 3b, 3c) arranged with active surfaces (4) parallel and facing each other inside the electrolytic cell in which they are immersed in an electrolyte;
- providing a line of supply of oxyhydrogen produced by electrolysis inside the at least one electrolytic cell (2), said line of supply being arranged in communication on one side with said at least one electrolytic cell (2), and on the other with an outlet from said plant (1);
- supplying said at least one electrolytic cell (2) with a supply signal (S1) determined by a control signal (Sc) having a pattern with low frequency pulses (fb).

15. The method according to claim 14, comprising eliminating the liquid in the oxyhydrogen gas produced by the electrolytic cells through a first and a second bubbler (7, 17) and draining the liquid contained in said second bubbler (17) into said first bubbler (7).

16. The method according to claim 15, comprising eliminating the liquid in the gas produced by the electrolytic cells through a first bubbler (7) and a cyclone (26) and draining the liquid contained in said cyclone (26) into said first bubbler (7).
